# EUROPÄISCHE PATENTSCHRIFT

(11) **EP 2 204 013 B1**
(45) Veröffentlichungstag und Bekanntmachung des Hinweises auf die Patenterteilung: **28.11.2018**
(21) Anmeldenummer: 08774680.6
(22) Anmeldetag: 03.07.2008
(51) Int. Cl.: H04L 12/26, H04L 29/06

(54) **VERFAHREN ZUM ANALYSIEREN VON GLEICHZEITIG ÜBERTRAGENEN, VERSCHLÜSSELTEN DATENSTRÖMEN IN IP-NETZWERKEN**
METHOD FOR ANALYZING CODED DATA STREAMS SIMULTANEOUSLY TRANSMITTED IN IP NETWORKS
PROCÉDÉ D'ANALYSE DE FLUX DE DONNÉES CODÉS TRANSMIS SIMULTANÉMENT, DANS DES RÉSEAUX IP

(30) Priorität: 30.08.2007 DE 102007041143
(43) Veröffentlichungstag der Anmeldung: 07.07.2010
(73) Patentinhaber: Unify GmbH & Co. KG, 80807 München (DE)
(72) Erfinder: HARTMANN, Siegfried, 85402 Kranzberg (DE); KRUMBÖCK, Jörg, 10823 Berlin (DE)
(74) Vertreter: Fritzsche, Thomas
(86) Internationale Anmeldenummer: PCT/EP2008/058552
(87) Internationale Veröffentlichungsnummer: WO 2009/030539

(56) Entgegenhaltungen:
- EP-A- 1 195 968
- WO-A-2005/091549
- US-A1- 2003 200 176
- US-A1- 2005 135 419
- BAUGHER D MCGREW CISCO SYSTEMS M ET AL: "The Secure Real-time Transport Protocol (SRTP)" 20040301; 20040300, 1. März 2004 (2004-03-01), XP015009491 in der Anmeldung erwähnt
- HUAWEI TECHNOLOGIES: "Security Consideration of IPTV Intermediate Devices" ITU CONTRIBUTION, [Online] Mai 2007 (2007-05), Seiten 1-5, XP002498491 Gefunden im Internet: URL:http://ties.itu.int/ftp/public/itu-t/f giptv/readonly/Previous_Meetings/20070507_ Bled-Slovenia/Contributions/FG%20IPTV-C-04 91e.doc> [gefunden am 2008-10-06]
- WING CISCO SYSTEMS F AUDET NORTEL S FRIES SIEMENS AG H TSCHOFENIG NOKIA SIEMENS NETWORKS D: "Disclosing Secure RTP (SRTP) Session Keys with a SIP Event Package; draft-wing-sipping-srtp-key-02.txt", 20071115, no. 2, 15 November 2007 (2007-11-15), XP015054771, ISSN: 0000-0004
- ANDREASEN M BAUGHER D WING CISCO SYSTEMS F: "Session Description Protocol (SDP) Security Descriptions for Media Streams; rfc4568.txt", 20060701, 1 July 2006 (2006-07-01), XP015055005, ISSN: 0000-0003
- WING CISCO SYSTEMS F AUDET NORTEL S FRIES SIEMENS AG H TSCHOFENIG NOKIA SIEMENS NETWORKS D: "Disclosing Secure RTP (SRTP) Session Keys with a SIP Event Package; draft-wing-sipping-srtp-key-01.txt", DISCLOSING SECURE RTP (SRTP) SESSION KEYS WITH A SIP EVENT PACKAGE; DRAFT-WING-SIPPING-SRTP-KEY-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 8 July 2007 (2007-07-08), XP015052335,

## Beschreibung

In Kommunikationsnetzen, insbesondere in Voice over IP Kommunikationsnetzen, ist für die Übertragung von durch Datenpakete gebildeten Datenströmen bzw. Multimediadatenströmen, d.h. der Nutzinformation bzw. der Sprachinformation, häufig das RTP- Protokoll (Real Time Protocol) vorgesehen. Das RTP-Protokoll ist im RFC Standard 1889 bzw. seit 2003 im RFC Standard 3550 definiert. Aufgrund gestiegener Sicherheitsbedürfnisse werden die Datenströme seit geraumer Zeit verschlüsselt übertragen, wobei dieses gesicherte RTP- Protokoll im RFC- Standard 3711 beschrieben ist. Die für die Verschlüsselung erforderliche Schlüsselinformation wird hierbei datenstromindividuell zugeordnet bzw. verwendet. Beispielsweise wird bei einer Multimedia- Session zwischen zwei Endpunkten in einem IP- basierten Kommunikationsnetz in jeweils einer Übertragungsrichtung ein Audio- und ein Videodatenstrom übertragen. Bezogen auf beide Übertragungsrichtungen werden innerhalb einer Multimediasession vier Datenströme übertragen, die jeweils separat verschlüsselt, d.h. datenstromindividuell verschlüsselt sind. Die Schlüsselinformation wird der jeweiligen Session bzw. zum jeweiligen Datenstrom während der Verbindungssignalisierung - beispielsweise dem SIP- Protokoll (Session Initiation Protocol) - zugeordnet bzw. ausgehandelt, wobei für die Verschlüsselung der Verbindungssignalisierung spezielle Schlüssel - beispielsweise Preshared Secrets - verwendet werden, die auch durch ein Mitlesen des Datenstroms nicht erkannt werden können.

In HUAWEI TECHNOLOGIES: "Security Consideration of IPTV Intermediate Devices" ITU CONTRIBUTION, Mai 2007 (2007-05), Seiten 1-5, XP002498491, ist beschrieben, dass viele zwischengeschaltete Geräte in einem System zur Verteilung von IPTV-Inhalten vorkommen, die möglichen Netzwerk-Hacker-Angriffen ausgesetzt sein können und zu der Schwachstelle des IPTV-Systems werden können.

In US 2005/0135419 ist ein Verfahren beschrieben, bei dem eine abwärts synchrone Mehrkanalkommunikation (DSSM: Downstream Synchronous Multichannel) bereitgestellt wird unter einer Mehrzahl von Einheiten, von denen jede ein vollständig DOCSIS™ 2.0 fähige Folgeeinheit ist. Nicht-DSSM Pakete werden auf einem einzelnen Kanal übertragen. DSSM Pakete werden in vielfache Stücke geteilt, die gleichzeitig auf allen verfügbaren Kanälen übertragen werden.

In WO 2005/091549 A1 ist ein Verfahren zur effektiven Übertragung von Verschlüsselungsinformation in einem sicheren Echtzeitprotokoll beschrieben. Ein Übertragungsendgerät kann zur Verschlüsselung von Daten mit einem Sitzungsschlüssel verwendet werden, der von einem Bitstrom abgeleitet wird. Um Bandbreite einzusparen, ist die Information in Abschnitte geteilt.

In EP 1 195 968 A2 ist ein Verfahren zur sicheren Übertragung gestreamter Medien beschrieben, bei dem jedes Paket des Datenstroms mit einem Paketschlüssel unter Verwendung eines schnellen Verschlüsselungsalgorithmus verschlüsselt ist.

In US 2003/0200176 A1 ist ein Verfahren beschrieben, bei dem eine Anbindung eines Titelschlüssels zu einem verschlüsselten Inhalt für eine synchronisierte Übertragung zu oder für eine Speicherung bei einem Empfänger bereitgestellt wird, wobei jedes übertragene Inhaltspaket mit einem Titelschlüssel versehen ist.

WING: "Disclosing Secure RTP (SRTP) Session Keys with a SIP Event Package; draft-wing-sipping-srtp-key-01.txt", IETF, 8. Juli 2007, offenbart die Übertragung von Schlüsselinformationen mittels SDP Protokoll.

In Kommunikationsnetzen werden meist mehrere Datenströme bzw. Multimediadatenströme über eine Übertragungsstrecke bzw. einen Übertragungsabschnitt übertragen. Für die in Kommunikationsnetzen auftretenden Problemsituationen ist eine Analyse bzw. eine Diagnose der übertragenen Datenströme zur Lokalisierung bzw. Eingrenzung von Fehlern unerlässlich. Für die Fehleranalyse bzw. Diagnose ist auf eine Rekonstruktion der unverschlüsselten Datenströme meist nicht zu verzichten. Eine Analyse bzw. Diagnose ist häufig in Übertragungsabschnitten mit mehreren gleichzeitig nach dem RTP- Protokoll übertragenen Datenströmen durchzuführen, wobei die Schlüsselinformation in den Datenströmen, beispielsweise RTP- Datenströmen, nicht verfügbar ist und auch nicht während der Verbindungssignalisierung ermittelt werden kann, da die Signalisierungsinformation verschlüsselt und die Schlüsselinformation nochmals verschlüsselt sind und die verwendeten Schlüsselinformationen nicht verfügbar sind.

Die der Erfindung zugrunde liegende Aufgabe besteht darin, die Analyse bzw. Diagnose von einzelnen oder gleichzeitig übertragenen, Datenpakete aufweisenden Datenströmen zu verbessern, wobei ein Datenstrom nach einem Netzwerkprotokoll zur Übertragung von Datenströmen datenstromindividuell gebildet und datenstromindividuell verschlüsselt ist. Die Aufgabe wird durch die Merkmale des Anspruchs 1 und 8 gelöst.

Der wesentliche Aspekt des erfindungsgemäßen Verfahrens ist darin zu sehen, dass ein Netzwerkprotokoll mit Datenpaketen mit einem erweiterbaren Kopfteil vorgesehen ist und die datenstromindividuell gebildete Schlüsselinformation in einen erweiterten Kopfteil eines Datenpakets des jeweiligen Datenstroms eingefügt und übertragen wird. Aus den erweiterten Kopfteilen von empfangenen Datenpaketen des jeweiligen Datenstroms wird die Schlüsselinformation datenstromindividuell selektiert und mit Hilfe zumindest einer selektierten datenstromindividuellen Schlüsselinformation wird der zugehörige, verschlüsselte Datenstrom entschlüsselt.

Ein wesentlicher Vorteil der Erfindung ist darin zu sehen, dass das Bilden und Einfügen von Schlüsselinformation mit geringem administrativem Aufwand erfolgen kann und der Aufwand für die Analyse bzw. Diagnose der gleichzeitig übertragenen Datenströme erheblich reduziert wird, wobei mit dem Datenpaket mit erweiterten Kopfteil zusätzlich Nutzinformation übertragen werden kann. Das Einfügen von Schlüsselinformation in einen erweiterten Kopfteil eines Datenpakets wird nur dann aktiviert bzw. veranlasst, wenn die Diagnose bzw. Analyse der Datenströme aktuell durchgeführt wird.

Als Netzwerkprotokoll mit erweiterbaren Kopfteil ist das gemäß dem RFC- Standard 3550 bzw. 1889 standardisierte Netzwerkprotokoll vorgesehen, wobei die Datenströme (dsl..n) gemäß dem Secured Real Time Protocol - Netzwerkprotokoll (SRTP) verschlüsselt werden. Das standardisierte SRTP - Protokoll basiert auf dem standardisierten RTP-Protokoll (Real Time Protocol) gemäß dem RFC- Standard 3550 bzw. 1889. Bei Verwendung des RTP- Protokolls kann in den standard-gemäß erweiterbaren Kopfteil bzw. Header die Schlüsselinformation mit geringem zusätzlichem Aufwand eingefügt werden.
Gemäß einer Ausgestaltung der Erfindung kann im Netzwerkprotokoll zusätzlich für Datenpakete mit eingefügter Schlüsselinformation ein Datenpakettyp derart bestimmt werden, dass bei einem Netzwerkprotokoll- gemäßen Empfang des Datenstroms die Datenpakete verworfen werden, wobei bei dieser Variante jedoch keine Nutzinformation bzw. Payload in das Datenpaket eingefügt wird. Hierdurch ist sichergestellt, dass die Schlüsselinformation bei Netzwerkprotokoll- gemäßer Übertragung der Datenpakete durch einen Netzwerkprotokoll- gemäßen Datenempfänger nicht gelesen wird. Als Datenpakettyp für die Datenpakete ist ein für das Netzwerkprotokoll neuer Datenpakettyp definiert oder vorteilhaft ist ein nicht benutzter Datenpakettyp vorgesehen, bei dem bei Netzwerkprotokollgemäßer Übertragung die Datenpakete durch einen Netzwerkprotokoll- gemäßen Empfänger nicht gelesen werden.
Gemäß einer weiteren vorteilhaften Ausgestaltung der Erfindung wird die datenstromindividuelle Schlüsselinformation kontinuierlich in Datenpakete mit erweitertem Kopfteil des jeweiligen Datenstroms eingefügt. Hierdurch wird nach Erkennen von einigen Datenpaketen mit eingefügter Schlüsselinformation eine kontinuierliches Ermitteln der Schlüsselinformation bzw. ein Ermitteln der Schlüsselinformation nach einer regelmäßigen Anzahl von empfangenen Datenpaketen möglich. Da nicht jedes Datenpaket untersucht werden muss, ob eine Schlüsselinformation eingefügt ist, wird die dynamische Belastung vermindert.

Vorteilhaft ist das datenstromindividuelle Einfügen von Schlüsselinformation (sil..n) für eine Analyse oder Diagnose und/oder Aufzeichnung der Datenströme (dsl..n) aktivierbar und anschließend deaktivierbar. Durch die Aktivierbarkeit des Einfügens von Schlüsselinformation in Datenpakete nur bei der Diagnose von Datenströmen bleibt die hohe Sicherheit im Betrieb ohne Diagnose erhalten.

Weitere vorteilhafte Weiterbildungen des erfindungsgemäßen Verfahrens und eine Ausgestaltung einer erfindungsgemäßen Anordnung sind den weiteren Ansprüchen zu entnehmen.

Im Folgenden werden die Erfindung und deren Weiterbildungen anhand zweier zeichnerischen Darstellungen näher erläutert. Dabei zeigen
- Figur 1: in einem Blockschaltbild eine Kommunikationsanordnung für die Durchführung des erfindungsgemäßen Verfahrens und
- Figur 2: ein für die Kommunikationsanordnung vorgesehenes, erfindungsgemäßes Datenpaket.

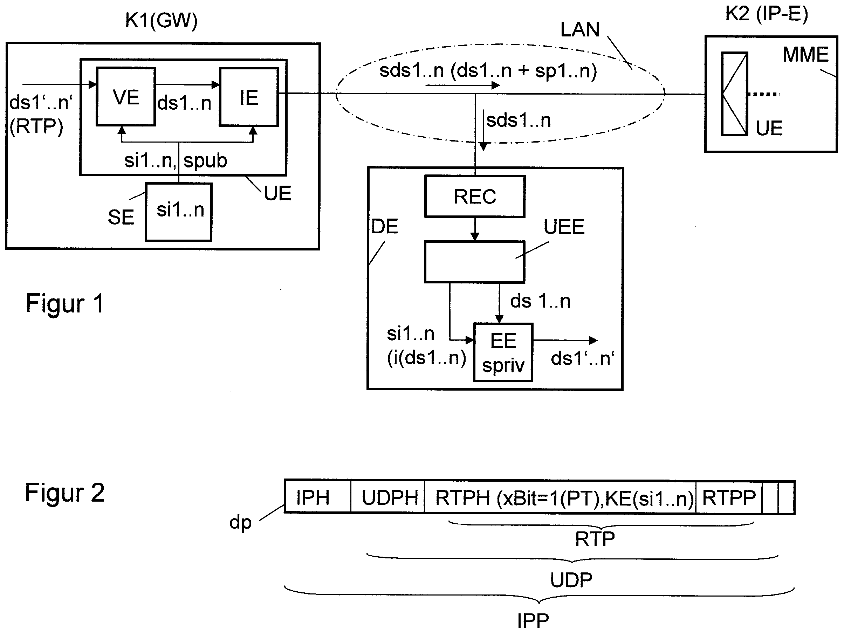

Figur 1 zeigt in einem Blockschaltbild beispielhaft eine Kommunikationsanordnung, in der das erfindungsgemäße Verfahren realisiert ist, wobei nur diejenigen Komponenten dargestellt sind, in denen das erfindungsgemäße Verfahren implementiert ist bzw. die für die Erläuterung des erfindungsgemäßen Verfahrens erforderlich sind.

Die Kommunikationsanordnung ist für Voice over IP, d.h. für die Übertragung von Sprachinformation im IP- Protokoll vorgesehen, wobei die Signalisierung mit dem standardisierten H.323 oder SIP- Protokoll durchgeführt wird. Für die Sprach- und/ oder Videoübertragung wird vorzugsweise das RTP- Protokoll (Real Time Protocol) eingesetzt, wobei die Sprach- und/oder Videoinformation direkt zwischen den durch die Signalisierung verbundenen Komponenten übertragen wird. Das RTP- Protokoll ist im RFC Standard 1889 bzw. 3550 definiert und stellt ein Protokoll für die kontinuierliche Übertragung von Echtzeitdaten, z.B. audiovisuellen bzw. Multimediadaten über IP- basierte Netwerke dar. Hierbei werden zu übertragende Datenpakete kodiert und für eine Übertragung über IPbasierte Netzwerke in IP- konforme Datenpakete eingefügt. Die Übertragung der Datenpakete erfolgt im Rahmen einer Session zwischen IP- Endgeräten, wobei jeweils einer Session zumindest ein Datenstrom ds oder mehrere Datenströme zugeordnet sind. Das RTP- Protokoll RTP ist sowohl für die Übertragung einzelner Datenströme ds als auch für die gleichzeitige Übertragung mehrerer Datenströme dsl..n bzw. Datenpakete vorgesehen. Für das Ausführungsbeispiel sei angenommen, dass gleichzeitig mehrere Datenströme dsl..n, d.h. Multimediaströme zwischen Komponenten eines IP- basierten Netzwerks übertragen werden.

Aufgrund gestiegener Sicherheitsanforderungen bei der Übertragung von Datenströmen ds werden in zunehmendem Maße die Datenströme ds, vorzugsweise gemäß dem RTP- Protokoll RTP übertragenen Datenströme ds, verschlüsselt. Hierzu wird für die Verschlüsselung eine Schlüsselinformation si verwendet, die den Komponenten, zwischen denen die Datenströme in einem IP- basierten Netzwerks übertragen werden, bekannt sind. Ein Protokoll zur Verschlüsselung von RTP- Datenströmen ist im SRTP- Protokoll (Secured Real Time Protocoll) gemäß dem RFC Standard 3711 definiert. Hierbei wird ein symmetrisches Kryptosystem verwendet, das ein hohes Maß an Sicherheit bietet.

Die Kommunikationsanordnung umfasst eine erste Komponente K1, die im Ausführungsbeispiel durch ein Gateway GW repräsentiert ist. Das Gateway GW ist beispielhaft über ein lokales Netzwerk LAN - im Weiteren mit LAN bezeichnet und in Figur 1 durch ein strichpunktierte Oval angedeutet - mit einer zweiten Komponente K2 verbunden, wobei diese im Ausführungsbeispiel durch einen Internet- Endpoint IP-E beispielsweise ein Multimedia-Endgerät MME repräsentiert ist. Das LAN ist beispielsweise physikalisch und prozedural durch ein Ethernet realisiert.

Für das Ausführungsbeispiel sei weiterhin angenommen, dass vom Gateway GW an den Internet-Endpoint IP-E gleichzeitig mehrere, nach dem RTP- Protokoll RTP gebildete Datenströme ds1'..n' bzw. Multimedia-Datenströme zu übermitteln sind. Beispielsweise werden die mehreren Datenströme ds1'..n' durch Audiodatenströme und Videodatenströme gebildet, wobei ein Audio- und ein Videodatenstrom jeweils einer Session zugeordnet sein kann. Zusätzlich werden die nach dem RTP- Protokoll RTP gebildeten Datenströme ds1'..n' mit Hilfe einer Verschlüsselungseinheit VE datenstromindividuell verschlüsselt. Dies bedeutet, dass für jeden Datenstrom ds1'..n' eine unterschiedliche Schlüsselinformation sil..n für die Verschlüsselung vorgesehen ist. Die Verschlüsselung wird bei RTP- Datenströmen ds vorzugsweise mit Hilfe des SRTP- Protokolls SRTP gemäß dem RFC Standard 3711 durchgeführt.

Erfindungsgemäß sollen aus den datenstromindividuell verschlüsselten Datenströmen dsl..n für eine Analyse der Datenströme durch eine Diagnoseeinheit DE die verschlüsselten Datenströme dsl..n wieder entschlüsselt werden. Üblicherweise ist eine Diagnoseeinheit DE an der Signalisierung zwischen den eine Verbindung aufbauenden Komponenten eines IP- basierten Netzwerks nicht beteiligt, wobei im Rahmen der Signalisierung die verwendete Schlüsselinformation si für den jeweiligen Datenstrom ds ausgehandelt wird. Zwar könnte die Signalisierung durch die Diagnoseeinheit DE ebenfalls analysiert werden, jedoch könnten die Schlüsselinformation sil..n für die Datenströme ds1..n nicht ermittelt werden, da die Signalisierung verschlüsselt und die Schlüsselinformationen si1..n nochmals verschlüsselt sind und die Schlüsselinformationen für diese Verschlüsselungen in der Diagnoseeinheit nicht verfügbar sind und auch nicht aus der Signalisierungsinformation ermittelt werden können. Dies bedeutet, dass die Diagnoseeinheit DE keine Information über die in den Datenströmen ds1..n verwendeten Schlüsselinformationen si besitzt.

Um eine Entschlüsselung der nach dem SRTP- Protokoll gebildeten Datenströme ds1..n trotzdem zu ermöglichen, wird das erfindungsgemäße Verfahren eingesetzt, wobei das erfindungsgemäße Verfahren beim Ausführungsbeispiel auf die gleichzeitige Übertragung mehrerer nach dem SRTP- Protokoll gebildeter Datenströme sdsl..n von dem Gateway GW zum IP- Endpoint IP-E bezogen ist. Bei entgegen gesetzter Übertragungsrichtung sind die nachstehend beschriebenen Verfahren und Komponenten entsprechend zu realisieren.

Im Gateway GW werden die Datenströme ds1'..n' in einer Verschlüsselungseinheit VE gemäß dem SRTP- Protokoll SRTP verschlüsselt, wobei die Verschlüsselungseinheit VE zusammen mit einer Einfügeeinheit IE in einer Übertragungseinheit UE angeordnet sind. Die erforderlichen Schlüsselinformationen si1..n sind in einer Schlüsseleinheit SE gespeichert und werden der Verschlüsselungseinheit VE und der Einfügeeinheit IE zur Verfügung gestellt - in Figur 1 durch einen mit si1..n bezeichneten Pfeile angedeutet. Hierbei ist für jeden Datenstrom ds1'..n' eine Schlüsselinformation si1..n vorgesehen, d.h. die Datenströme ds1'..n' werden datenstromindividuell verschlüsselt.

In der Einfügeeinheit IE wird in die für die Übermittlung der Schlüsselinformation si1..n vorgesehenen Datenpakete dp gemäß dem RTP- Protokoll RTP die Erweiterung KE - siehe Figur 2 - des Kopfteils durch Setzen des Header- Extention- Bits auf 1 eingefügt. Des Weiteren ist in der Erweiterung KE des Kopfteils RTPH bzw. in der Header-Extention die Anzahl der 16-Bit- Worte angegeben, die die Header- Extention umfasst. Zusätzlich bzw. vorteilhaft kann in die für die Übertragung der Schlüsselinformation si1..n vorgesehenen Datenpakete eine Datenpakettyp - Information bzw. gemäß dem RTP- Protokoll RTP ein Payloadtyp PT angegeben werden, durch den ein Datenpaket als Datenpaket dp mit eingefügter Schlüsselinformation sil..n bestimmt ist. Hierbei sollte ein Payloadtyp PT gewählt bzw. angegeben werden, der bei der Standard- gemäßen Datenpaketen nicht verwendet wird, und Datenpakete mit dem ausgewählten Payloadtyp PT bei standardgemäßer Übertragung verworfen werden. Dies bedeutet, dass bei dieser Variante keine Nutzinformation bzw. Payload in das Datenpaket dp eingefügt werden darf.

Um die Sicherheit bei der Übertragung der Datenpakete dp mit Schlüsselinformation sil..n zu erhöhen, können die Datenpakete dp1 oder die darin enthaltene Schlüsselinformation sil..n zusätzlich verschlüsselt werden. Hierzu ist eine zusätzliche Schlüsselinformation erforderlich, die durch einen öffenlichen Schlüssel spublic und eine privaten Schlüssel spriv gebildet ist. Hierbei wird der öffenliche Schlüssel spub in der Schlüsseleinheit SE im Gateway GW für die zusätzliche Verschlüsselung bereitgestellt und für die Verschlüsselung der Datenpakete dp oder der darin enthaltenen Schlüsselinformation sil..n an die Übertragungseinheit UE übermittelt - in der Figur 1 durch einen mit spub bezeichneten Pfeil dargestellt. In der Diagnoseeinheit DE wird der private Schlüssel spriv durch die Entschlüsselungseinheit EE breitgestellt und für die Entschlüsselung der zusätzlich verschlüsselten Datenpakete dp oder der Schlüsselinformation sil..n verwendet - in Figur 1 durch die Bezeichnung spriv in der Entschlüsselungseinheit EE angedeutet.

Anschließend wird in der Einfügeeinheit IE die Schlüsselinformation sil..n in die Erweiterung KE des Kopfteils RTPH bzw. in den Extention- Header der Datenpakete der jeweiligen Datensröme dsl..n eingefügt.

Die die Schlüsselinformation sil..n enthaltenden Datenströme sdsl..n werden über das LAN an den IP-Endpoint IP-E übertragen. Zum Zecke der Diagnose bzw. der Analyse der Datenströme sdsl..n ist die an das LAN angeschlossene Diagnoseeinheit DE vorgesehen. Um die die Schlüsselinformation sil..n enthaltenden Datenströme sdsl..n analysieren zu können, müssen die verschlüsselten Datenströme sdsl..n entschlüsselt werden. Hierzu ist wie eingangs bereits erläutert, für jeden verschlüsselten Datenstrom dsl..n die Schlüsselinformation sil..n für eine Entschlüsselung erforderlich. Da erfindungsgemäß die die Schlüsselinformationen sil..n enthaltenden Datenpakete dp in die Datenströme sdsl..n eingefügt sind, werden in der Diagnoseeinheit DE mit Hilfe einer Überwachungseinheit UEE Datenpakete dp in den jeweiligen Datenströmen dsl..n gesucht, gelesen und gespeichert, bei denen eine Erweiterung KE des Kopfteils RTPH bzw. eine Header- Extention angezeigt ist. Zusätzlich können Datenpakete dp mit einer Schlüsselinformation sil..n auch anhand des Payloadtyp PT erkannt werden.

Anschließend wird in Datenströmen sdsl..n aus der jeweiligen Erweiterung KE des Kopfteils RTPH bzw. der Header Extention des erkannten Datenpakets dp die Schlüsselinformation sil..n selektiert und gespeichert, worauf die Schlüsselinformation sil..n aus den Erweiterungen KE der Kopfteile RTPH bzw. den Header Extentions entfernt werden kann. Zusätzlich kann auch die Erweiterung der Kopfteile RTPH durch Einfügen einer geeigneten Information in den Kopfteil bzw. in den Header zurückgesetzt werden. Zusammen mit der jeweiligen Schlüsselinformation sil..n ist auch eine Information i(ds1..n) aus den Erweiterungen KE der Kopfteile RTPH zu ermitteln und zu speichern, für welche der Datenströme dsl..n die Schlüsselinformation sil..n zum Entschlüsseln vorgesehen ist.

Sowohl die verschlüsselten Datenströme dsl..n als auch die selektierte Schlüsselinformation sil..n werden an eine Entschlüsselungseinheit EE übermittelt. In dieser werden mit Hilfe der jeweiligen Schlüsselinformation sil..n, d.h mit der Entschlüsselungsinformation und der Information i(ds1..n) die verschlüsselten Datenströme sdsl..n entschlüsselt. Nach der Entschlüsselung stehen die unverschlüsselten Datenströme ds1'..n' für eine Diagnose bzw. Analyse in der Diagnoseeinheit DE bereit.

In der Diagnoseeinheit DE ist optional bzw. vorteilhaft eine zwischen LAN und Diagnoseeinheit DE eingefügte Aufzeichnungseinheit REC vorgesehen, in der die Datenströme sdsl..n aufgezeichnet werden können. Das Selektieren der Schlüsselinformation si1..n und die Analyse bzw. Diagnose der aufgezeichneten Datenströme sdsl..n kann dann zu einem späteren Zeitpunkt durchgeführt werden, beispielsweise bei einer Aufzeichnung in der Nachtzeit und einer späteren Diagnose während des Tages. Die Aufzeichnungseinrichtung REC kann alternativ auch nach der Entschlüsselung der verschlüsselten Datenströme sdsl..n eingefügt werden - nicht dargestellt -, wobei die Datenströme ds1'..n' unverschlüsselt für die Diagnose bzw. Analyse bereitstehen.

Figur 2 zeigt die Protokollstruktur eines Datenpakets dp, in das eine Schlüsselinformation si1..n eingefügt ist. Das Datenpaket dp ist gemäß dem RTP- Standard RTP gebildet und weist nach RFC 3550 einen Kopfteil RTPH - in der Fachwelt mit Header bezeichnet - und einen Nutzteil RTPP - in der Fachwelt mit Payload bezeichnet - auf. Eingebettet ist das RTP- Protokoll RTP in ein UDP- Protokoll UDP, dessen Header UDPH an den Header RTPH des RTP- Protokoll angefügt ist. Da es sich um eine IP- basierte Übertragung handelt, ist das UDP- Protokoll in einem IP- Protokoll IPP verpackt, wozu ein IP- Header IPH angefügt wird. Bei einer Übertragung über das LAN, insbesondere ein Ethernet LAN ist das entsprechende Protokollelement noch zu berücksichtigen - der Übersichtlichkeit halber nicht dargestellt.

Im Header RTPH des RTP- Protokolls RTP stellt die Information über die Erweiterung KE des Kopfteils RTPH eine wesentliche Information für das erfindungsgemäße Verfahren dar. Hierzu ist gemäß dem RTP- Standard RTP ein x-Bit vorgesehen, wobei durch ein Setzen x-Bit = 1 die Header Extension angezeigt wird - in Figur 2 durch die Bezeichnung xBit=1 angedeutet. Zusätzlich kann eine Information über den Payloadtyp PT eingefügt werden - in Figur 2 durch die Bezeichnung PT angedeutet. Es wird ein Payloadtyp PT benutzt, der im RTP- Protokoll RTP zwar angegeben ist, jedoch ist diesem kein Payloadtyp PT zugeordnet, wobei in der Standardisierungsphase ein Payloadtyp PT "19" definiert, dieser später jedoch nicht benutzt wurde und jetzt als "reserviert" angegeben ist. Für die Bestimmung eines RTP- Datenpakets dp mit Schlüsselinformation sil..n wird daher vorteilhaft der Payloadtyp 19 verwendet. Bei zusätzlicher Verwendung eines Payloadtys PT darf die den Payloadteil bzw. Nutzteil RTPP keine Nutzinformation eingefügt werden, da derart gebildete Datenpakete dp bei standard- gemäßer Übertragung bei der empfangenden Komponente verworfen werden.

Der Erweiterung KE des Kopfteils PTRH bzw. die Header Extension ist im standardierten RTP- Header RTPH gemäß nachstehender Tabelle 1 positioniert, wobei die Nummerierung 0..31 jeweils ein Bit repräsentiert.

Gemäß Tabelle 1 wird durch das x- Bit die Header Extension KE angezeigt, d.h. bei einem x-Bit = 1 ist der Header PTRH eines Datenpakets dp erweitert. Der Umfang der Erweiterung wird durch Anzahl der 16-Bit-Felder im Header Extension Feld angezeigt. Die Schlüsselinformation sil..n ist für den jeweiligen Datenstrom dsl..n in den Extenstion Header KE eingefügt, wobei in nachstehender Tabelle 2 die für eine Entschlüsselung gemäß dem standardierten SRTP- Protokoll SRTP verwendete Schlüsselinformation si dargestellt ist, wobei die Nummerierung 0..9 jeweils ein Bit repräsentiert.

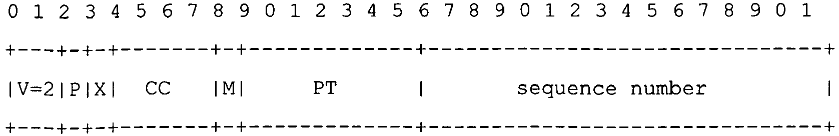

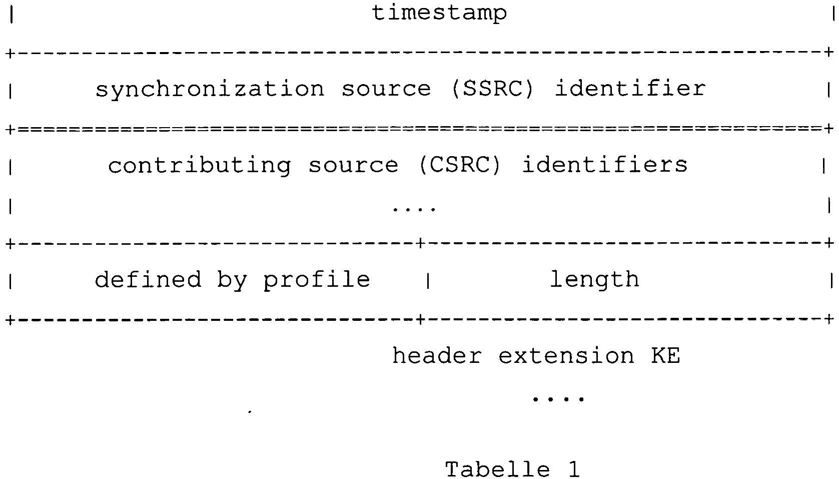

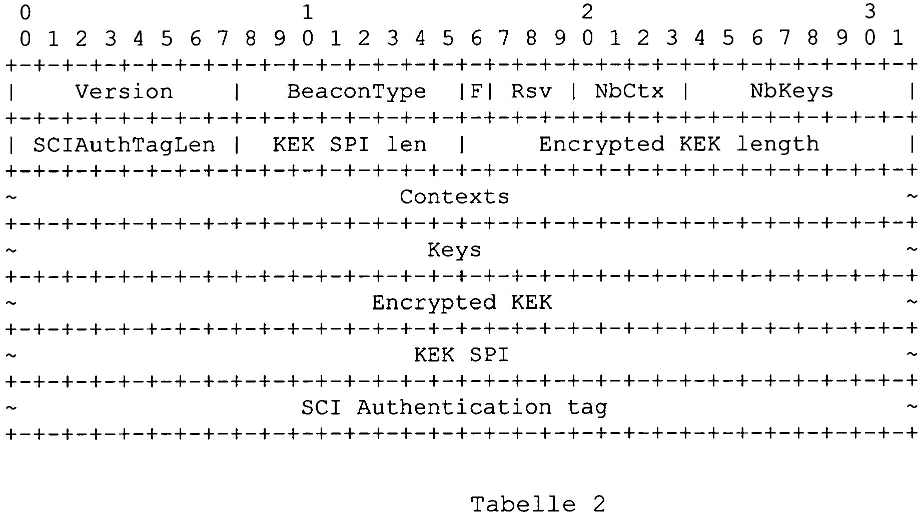

Hierbei ist den in Tabelle 1 vorhandenen Angaben gemäß dem SRTP- Standard SRTP folgende Bedeutung zugeordnet.

### Version:

Version of the tracebeacon.

### BeaconType:

Content of the tracebeacon.

### F:

Indicate if the lengths of the variable fields is fixed to their maximum values (the lengths are fixed if F==1).

### Rsv:

Reserved bits.

### NbCtx:

Indicates the number of contexts contained in the packet. A context is an association between a direction (Tx/Rx) and an SSRC. It has been judged that a maximum of 15 contexts should suffice for the current purposes.

### NbKeys:

Indicates the number of keys contained in the packet.

### SCIAuthTagLen:

The length of the authentication tag appended to the tracebeacon. This length will always be zero for now as the authentication is not expected to be used in the short-term.

### KEK SPI Len:

Length in bytes of the SPI needed to retrieve the key that encrypted the KEK. This length can be zero if the Encrypted KEK is not present in the tracebeacon.

### Encrypted KEK length:

Length of the symmetric key encrypted using RSA, in bytes. This length can be zero if the tracebeacon does not contain this key. Since the Encrypted KEK can be the longest part of the tracebeacon, sending the Encrypted KEK in, say, one tracebeacon out of two can result in appreciable gains in the average size of the tracebeacons sent.

### Contexts:

Configuration information for the contexts (see the next diagrams).

### Keys:

Configuration information for the keys (see the next diagrams).

### Encrypted KEK:

Symmetric key encrypted using RSA. This field can take up to 256 bytes when the public key has 2048 bits and does not need to end on a 32 bits boundary. This field is also optional as it can have a length of zero

### KEK SPI:

Identifier that allows to retrieve the key needed to decrypt the KEK. In your case this field corresponds to a Certificate Id. This field does not need to end on a 32 bits boundary. Like the Encrypted KEK this field is optional, as it can have a length of zero.

### SCI Authentication tag:

The authentication tag of the tracebeacon. The authenticated portion of the tracebeacon will be the first eight bytes, the contexts and keys sections. This field is optional, as the authentication tag length can be zero. It is indeed not expected to be present for this version of the tracebeacon.

Mit Hilfe der vorhergehend beschriebenen Schlüsselinformation si1..n gemäß dem standardisierten SRTP- Protokoll SRTP werden die verschlüsselten Datenströme ds1..n entschlüsselt, d.h. in die ursprünglichen Datenströme ds1'..n' umgesetzt. Die Datenströme ds1'..n' können in der Diagnoseeinheit DE entsprechend den implementierten Diagnoseroutinen - nicht dargestellt - bearbeitet werden.

## Patentansprüche

1. Verfahren zur Analyse von zumindest einem verschlüsselte Datenpakete aufweisenden Datenstrom, wobei der Datenstrom nach einem ersten Netzwerkprotokoll zum Verschlüsseln und Übertragen von Datenströmen datenstromindividuell gebildet und datenstromindividuell verschlüsselt ist, wobei
a) in einer Übertragungseinheit ein Kopfteil eines nach einem zweiten Netzwerkprotokoll gebildeten Datenpaketes erweiterbar ausgeführt wird,
b) datenstromindividuell gebildete Schlüsselinformation zur Verschlüsselung des individuellen Datenstroms in einen erweiterten Kopfteil des Datenpakets eingefügt wird,
c) das Datenpaket mit dem erweiterten Kopfteil in den datenstromindividuell verschlüsselten Datenstrom eingefügt und über ein Netzwerk übertragen wird,
d) in einer in dem Netzwerk angeordneten Überwachungseinheit aus den erweiterten Kopfteilen von empfangenen Datenpaketen, die in den datenstromindividuell verschlüsselten Datenstrom eingefügt und übertragen sind, die Schlüsselinformation datenstromindividuell selektiert wird,
e) mit Hilfe zumindest der selektierten datenstromindividuellen Schlüsselinformation der zugehörige, datenstromindividuell verschlüsselte Datenstrom entschlüsselt wird,
f) in der Übertragungseinheit das Einfügen der datenstromindividuellen Schlüsselinformation in den erweiterten Kopfteil des Datenpakets nur dann aktiviert wird, wenn die Analyse des datenstromindividuell verschlüsselten Datenstroms durchgeführt wird und
g) als zweites Netzwerkprotokoll mit erweiterbaren Kopfteil das gemäß dem RFC- Standard 3550 bzw. 1889 standardisierte RTP-Netzwerkprotokoll genutzt wird, wobei die Datenströme gemäß dem Secured Real Time Protocol - Netzwerkprotokoll als erstem Netzwerkprotokoll verschlüsselt werden.

2. Verfahren nach Anspruch 1, **dadurch gekennzeichnet, dass** im zweiten Netzwerkprotokoll mit Datenpaketen mit erweitertem Kopfteil und eingefügter Schlüsselinformation ohne Einfügung von Nutzinformationen in die Datenpakete mit erweitertem Kopfteil und eingefügter Schlüsselinformation zusätzlich ein Datenpakettyp derart benutzt wird, dass bei einem Netzwerkprotokoll- gemäßen Empfang des Datenstroms die Datenpakete verworfen werden.

3. Verfahren nach Anspruch 2, **dadurch gekennzeichnet,**
**dass** als Datenpakettyp für die Schlüsseldatenpakete ein für das zweite Netzwerkprotokoll neuer Datenpakettyp definiert oder ein nicht benutzter Datenpakettyp vorgesehen ist.

4. Verfahren nach einem der vorhergehenden Ansprüche, **dadurch gekennzeichnet,**
**dass** die datenstromindividuelle Schlüsselinformation kontinuierlich in Datenpakete mit erweitertem Kopfteil des individuellen Datenstroms derart eingefügt werden, dass in mehrere Datenpakete die datenstromindividuelle Schlüsselinformation eingefügt werden.

5. Verfahren nach einem der vorhergehenden Ansprüche, **dadurch gekennzeichnet,**
**dass** die Schlüsselinformation zusätzlich verschlüsselt wird, wobei die zusätzliche Schlüsselinformation einer Analyse und/oder Diagnose und/oder Aufzeichnungsfunktion bereitgestellt wird.

6. Verfahren nach Anspruch 5, **dadurch gekennzeichnet,**
**dass** die zusätzliche Schlüsselinformation durch eine asymmetrische Schlüsselinformation repräsentiert ist, wobei für die Verschlüsselung der Schlüsseldatenpakete eine zum Entschlüsseln des Datenstroms unterschiedliche Schlüsselinformation vorgesehen ist.

7. Verfahren nach einem der vorhergehenden Ansprüche, **dadurch gekennzeichnet,**
**dass** das datenstromindividuelle Einfügen von Schlüsselinformation für eine Analyse oder Diagnose und/oder Aufzeichnung der Datenströme aktivierbar und anschließend deaktivierbar ist.

8. Kommunikationsanordnung zur Analyse von zumindest einem verschlüsselte Datenpakete aufweisenden Datenstrom, wobei der Datenstrom nach einem ersten Netzwerkprotokoll zum Verschlüsseln und Übertragen von Datenströmen datenstromindividuell gebildet und datenstromindividuell verschlüsselt ist, bestehend aus
a) einer Schlüsseleinheit, die so ausgebildet ist, dass eine datenstromindividuelle Schlüsselinformation zur Verschlüsselung des individuellen Datenstroms gebildet werden kann,
b) einer Übertragungseinheit mit einem zweiten Netzwerkprotokoll, die so ausgebildet ist, dass ein Kopfteil eines Datenpaketes erweiterbar ist und
c) die datenstromindividuell gebildete Schlüsselinformation in ein erweitertes Kopfteil des Datenpakets einfügbar ist,
d) das Datenpaket mit dem erweiterten Kopfteil in den datenstromindividuell verschlüsselten Datenstrom einfügbar ist und die Datenpakete mit eingefügter Schlüsselinformation über ein Netzwerk übertragbar sind, wobei
e) das Einfügen der datenstromindividuellen Schlüsselinformation in den erweiterten Kopfteil des Datenpakets nur dann aktiviert ist, wenn die Analyse des datenstromindividuell verschlüsselten Datenstroms durchgeführt wird,
f) einer in dem Netzwerk angeordnete Überwachungseinheit, die so ausgebildet ist, dass die Schlüsselinformation aus den erweiterten Kopfteilen von empfangenen Datenpaketen, die in des datenstromindividuellen Datenstrom eingefügt und übertragen sind, datenstromindividuell selektierbar ist, und
g) einer Entschlüsselungseinheit, die so ausgebildet ist, dass der datenstromindividuell verschlüsselte Datenstrom mit Hilfe zumindest der selektierten datenstromindividuellen Schlüsselinformation datenstromindividuell entschlüsselbar ist
h) wobei als zweites Netzwerkprotokoll mit erweiterbaren Kopfteil das gemäß dem RFC- Standard 3550 bzw. 1889 standardisierte RTP-Netzwerkprotokoll genutzt wird, wobei die Datenströme gemäß dem Secured Real Time Protocol - Netzwerkprotokoll als erstem Netzwerkprotokoll verschlüsselt werden.

9. Kommunikationsanordnung nach Anspruch 8, **dadurch gekennzeichnet,**
**dass** die Überwachungseinheit und die Entschlüsselungseinheit in eine Diagnoseeinheit, die so ausgebildet ist, dass die entschlüsselten Datenströme analysierbar sind, integriert sind.

10. Kommunikationsanordnung nach Anspruch 8 oder 9, **dadurch gekennzeichnet,**
**dass** eine Aufzeichnungseinrichtung, die so ausgebildet ist, dass die die Schlüsselinformationen enthaltenden Datenströme und/oder die verschlüsselten Datenströme und/oder die entschlüsselten Datenströme aufgezeichnet werden können, vorgesehen ist.

11. Kommunikationsanordnung nach einem der Ansprüche 8 bis 10, **dadurch gekennzeichnet,**
**dass** die Schlüsseleinheit derart ausgestaltet ist, dass das Erweitern der Kopfteile von Datenpaketen und das Einfügen der Schlüsselinformation in die erweiterten Kopfteile für eine Analyse und/oder Aufzeichnung der Datenströme aktivierbar und deaktivierbar sind.

## Claims

1. Method for analyzing at least one coded data stream exhibiting data packets, wherein the data stream is data stream specifically generated according to a network protocol for coding and transmission of data streams and data stream specifically coded,
wherein
a) a header of a data packet generated according to a second network protocol is executed in an expandable manner in a transmission unit,
b) data stream specifically generated coding information for the coding of the individual data streams is inserted in an expanded header of the data packet,
c) the data packet with the expanded header is inserted in the data stream specifically coded data stream and is transmitted over a network,
d) the coding information is selected in a data stream specific manner in a monitoring unit that is arranged in the network, from the expanded headers from received data packets that are inserted and transmitted in the data stream specific coded data steam,
e) the associated data stream specifically coded data stream is decoded with the help of at least the selected data stream specific coding information,
f) the insertion of the data stream specific coding information in the expanded header of the data packet is only activated in the transmission unit when the analysis of the data stream specific data stream is executed, and
g) the network protocol according to RFC standard 3550 or alternatively 1889 standardized RTP is used as second network protocol with expandable header,
wherein the data streams are coded, as a first network protocol, according to the secured real time protocol network protocol.

2. Method according to Claim 1, **characterized by** the fact that, in the second network protocol with data packets with expanded header and inserted key information, without insertion of useful information in the data packets with expanded header and inserted key information, a data packet type is additionally used in such a manner that upon the receipt of the data stream according to the network protocol, the data packets are rejected.

3. Method according to Claim 2, **characterized by** the fact that a data packet type that is new for the second network protocol is defined as data packet type for the key data packets or an unused data packet type is foreseen.

4. Method according to one of the preceding Claims, **characterized by** the fact that
the data stream specific key information is continually inserted in data packets with expanded header of the individual data stream in such a manner that the data stream specific key information is inserted in a plurality of the data packets.

5. Method according to one of the preceding Claims, **characterized by** the fact that
the key information is additionally coded, wherein the additional key information is made available for an analysis and/or diagnosis and/or recording function.

6. Method according to Claim 5, **characterized by** the fact that the additional key information is represented by an asymmetrical key information, wherein for the coding of the key data packets, a decoding of the key information that deviates from the data stream is foreseen.

7. Method according to one of the preceding Claims **characterized by** the fact that
the data stream specific insertion of key information for an analysis or diagnosis and/or recording of the data streams can be activated and subsequently deactivated.

8. A communication arrangement for the analysis of at least one coded data stream containing data packets, wherein according to a first network protocol, the data stream is data stream specifically generated and data stream specifically coded for the coding and transmission of data streams,
comprising
a) a coding unit that is laid out in such a manner that data stream specific key information can be generated for the coding of the individual data stream,
b) a transmission unit with second network protocol, that is laid out in such a way that a header of a data packet is expandable, and
c) the data stream specifically generated key information can be inserted in an expanded header of the data packet,
d) the data packet with the expanded header can be inserted in the data stream specific coded data stream and the data packets with inserted key information can be transmitted by means of a network, wherein
e) the insertion of the data stream specific key information is only then activated in the expanded header of the data packet when the analysis of the data stream specific coded data stream is executed,
f) a monitoring unit that is arranged in the network, that is laid out in such a manner that the key information can be data stream specifically selected from the expanded headers of the received data packets that are inserted and transmitted in the data stream specific data stream, and
g) a decoding unit, that is laid out in such a manner that the data stream specific coded data stream is encoded data stream specifically with the assistance of at least the selected data stream specific key information
h) wherein, with expandable header, the network protocol according to the RFC-standard 3550 or alternatively 1889 standardized RTP network protocol is used as second network protocol,
wherein the data streams are coded as first network protocol according to the secured real time protocol network protocol.

9. Communication arrangement according to Claim 8, **characterized by** the fact that
the monitoring unit and the decoding unit are integrated in a diagnosis unit that is laid out in such a manner that the decoded data streams can be analyzed.

10. Communication arrangement according to Claim 8 or 9, **characterized by** the fact that
a recording device, that is laid in such a manner that the data streams containing key information and/or the coded data streams and/or the decoded data streams can be recorded is foreseen.

11. Communication arrangement according to one of the Claims 8 through 10 that is **characterized by** the fact that the coding unit is laid out in such a manner that the removal of the headers from data packets and the insertion of the key information in the expanded headers for an analysis and/or recording of the data streams can be activated and deactivated.

## Revendications

1. Procédé d'analyse d'au moins un flux de données comprenant des paquets de données chiffrés, dans lequel le flux de données est formé de manière individuelle au flux de données et chiffré de manière individuelle au flux de données d'après un premier protocole de réseau pour le chiffrement et la transmission de flux de données,
dans lequel
a) dans une unité de transmission, un en-tête d'un paquet de données formé d'après un second protocole de réseau est exécuté d'une manière extensible,
b) une information de clé, formée de manière individuelle au flux de données, pour le chiffrement du flux de données individuel est insérée dans un en-tête étendu du paquet de données,
c) le paquet de données avec l'en-tête étendu est inséré dans le flux de données chiffré de manière individuelle au flux de données et transmis par le biais d'un réseau,
d) dans une unité de surveillance disposée dans le réseau, à partir des en-têtes étendus des paquets de données reçus, qui sont insérés dans le flux de données chiffré de manière individuelle au flux de données et transmis, l'information de clé est sélectionnée de manière individuelle au flux de données,
e) à l'aide au moins de l'information de clé individuelle au flux de données sélectionnée, le flux de données associé chiffré de manière individuelle au flux de données est déchiffré,
f) dans l'unité de transmission, l'insertion de l'information de clé individuelle au flux de données dans l'en-tête étendu du paquet de données est ensuite activée uniquement lorsque l'analyse du flux de données chiffré de manière individuelle au flux de données est exécutée et
g) en tant que second protocole de réseau avec des en-têtes extensibles est utilisé le protocole de réseau RTP normalisé selon la norme RFC 3550 ou 1889,
dans lequel les flux de données sont chiffrés selon le protocole de réseau, Secured Real Time Protocol (Protocole en temps réel sécurisé), en tant que premier protocole de réseau.

2. Procédé selon la revendication 1, **caractérisé en ce que** dans le second protocole de réseau avec des paquets de données avec un en-tête étendu et avec l'information de clé insérée sans insertion d'informations utiles dans les paquets de données avec un en-tête étendu et avec une information de clé insérée, un type de paquet de données est utilisé en plus de manière telle que, en cas de réception, selon un protocole de réseau, du flux de données les paquets de données sont rejetés.

3. Procédé selon la revendication 2, **caractérisé en ce qu'**en tant que type de paquet de données pour les paquets de données de clé est défini un nouveau type de paquet de données pour le second protocole de réseau ou est prévu un type de paquet de données non utilisé.

4. Procédé selon l'une quelconque des revendications précédentes, **caractérisé**
**en ce que** l'information de clé individuelle au flux de données est insérée continuellement dans des paquets de données avec en-tête étendu du flux de données individuel de manière telle que l'information de clé individuelle au flux de données est insérée dans plusieurs paquets de données.

5. Procédé selon l'une quelconque des revendications précédentes, **caractérisé,**
**en ce que** l'information de clé est chiffrée en plus, dans lequel l'information de clé supplémentaire est soumise à une analyse et/ou à un diagnostic et/ou à une fonction d'enregistrement.

6. Procédé selon la revendication 5, **caractérisé en ce que** l'information de clé supplémentaire est représentée par une information de clé asymétrique, dans lequel, pour le chiffrement des paquets de données de clé, il est prévu une information de clé différente pour le déchiffrement du flux de données.

7. Procédé selon l'une quelconque des revendications précédentes, **caractérisé**
**en ce que** l'insertion de manière individuelle au flux de données de l'information de clé peut être activée pour une analyse ou un diagnostic et/ou un enregistrement et peut être ensuite désactivée.

8. Dispositif de communication pour l'analyse d'au moins un flux de données comprenant des paquets de données chiffrés, dans lequel le flux de données est formé de manière individuelle au flux de données d'après un premier protocole de réseau et chiffré de manière individuelle au flux de données pour le chiffrement et la transmission de flux de données, composé de
a) une unité de clé, qui est conçue de sorte qu'une information de clé individuelle au flux de données peut être formée pour le chiffrement du flux de données individuel,
b) une unité de transmission avec un second protocole de réseau, qui est formée de sorte qu'un en-tête d'un paquet de données est extensible et
c) l'information de clé formée de manière individuelle au flux de données peut être insérée dans un en-tête étendu du paquet de données,
d) le paquet de données avec l'en-tête étendu peut être inséré dans le flux de données chiffré de manière individuelle au flux de données et les paquets de données avec l'information de clé insérée peuvent être transmis par le biais d'un réseau, dans lequel
e) l'insertion de l'information de clé individuelle au flux de données dans l'en-tête étendu du paquet de données est ensuite activée uniquement lorsque l'analyse du flux de données chiffré de manière individuelle au flux de données est exécutée,
f) une unité de surveillance disposée dans le réseau, qui est conçue de sorte que l'information de clé peut être sélectionnée de manière individuelle au flux de données dans des en-têtes étendus des paquets de données reçus, qui sont insérés dans le flux de données individuel au flux de données, et
g) une unité de déchiffrement qui est conçue de sorte que le flux de données chiffrée de manière individuelle au flux de données peut être déchiffré de manière individuelle au flux de données à l'aide d'au moins l'information de clé sélectionnée de manière individuelle au flux de données,
h) dans lequel en tant que second protocole de réseau avec des en-têtes extensibles est utilisé le protocole de réseau RTP normalisé selon la norme RFC 3550 ou 1889,
dans lequel les flux de données sont chiffrés selon le protocole de réseau, Secured Real Time Protocol (Protocole en temps réel sécurisé), en tant que premier protocole de réseau

9. Dispositif de communication selon la revendication 8, **caractérisé**
**en ce que** l'unité de surveillance et l'unité de déchiffrement sont intégrées dans une unité de diagnostic qui est conçue de sorte que les flux de données déchiffrés peuvent être analysés.

10. Dispositif de communication selon la revendication 8 ou 9, **caractérisé**
**en ce qu'**il est prévu un système d'enregistrement qui est conçu de sorte que les flux de paquets contenant l'information de clé et/ou les flux de paquets chiffrés et/ou les flux de paquets déchiffrés peuvent être enregistrés.

11. Dispositif de communication selon l'une quelconque des revendications 8 à 10, **caractérisé**
**en ce que** l'unité de clé est agencée de manière telle que l'extension des en-têtes de paquets de données et l'insertion de l'information de clé dans les en-têtes étendus peuvent être activées et désactivées pour une analyse et/ou un enregistrement des flux de données.
